Europäisches Patentamt

European Patent Office

Office européen des brevets

(11) Veröffentlichungsnummer: **0 304 547**

**A2**

(12) **EUROPÄISCHE PATENTANMELDUNG**

(21) Anmeldenummer: 88107516.2

(51) Int. Cl.4: **G07F 7/10 , H04L 9/00**

(22) Anmeldetag: 22.04.82

(30) Priorität: 22.04.81 US 256523

(43) Veröffentlichungstag der Anmeldung:
01.03.89 Patentblatt 89/09

(60) Veröffentlichungsnummer der früheren
Anmeldung nach Art. 76 EPÜ: 0 063 794

(84) Benannte Vertragsstaaten:
AT CH DE FR GB IT LI

(71) Anmelder: **Siemens Aktiengesellschaft Berlin
und München**
**Wittelsbacherplatz 2**
**D-8000 München 2(DE)**

(72) Erfinder: **Müller-Schloer, Christian, Dr.**
**Bruderstrasse 2/4**
**D-8000 München 22(DE)**

(54) **Gerät zur Identitätsüberprüfung, Verfahren zur kryptografischen Identitätsüberprüfung und Verfahren zum Feststellen einer Unterbrechung zwischen einem Endgerät und einem Kommunikationssystem.**

(57) Es wird ein Gerät zur Identitätsüberprüfung unter Benutzung einer Datenkarte beschrieben, welches wenigstens ein Endgerät und eine Sicherheitsdienststation umfaßt. Das oder die Endgeräte und die Station sind über ein Kommunikationssystem miteinander verbunden. Das Endgerät ist mit einer einen Speicher aufweisenden zentralen Verarbeitungseinheit, einem Kartenleser zum Lesen von Daten von der Datenkarte, einer Sensoroder Nummerneingabeeinrichtung zur Eingabe einer persönlichen Identifizierungsinformation und einem Kryptomodul versehen. Der Kryptomodul ver- und entschlüsselt Daten, die aus dem Speicher unter der Kontrolle der zentralen Verarbeitungseinheit erhalten werden. Die Station enthält ebenfalls eine zentrale Verarbeitungseinheit mit einem Speicher und einen Kryptomodul. Die Station enthält auch einen Komparator zum Vergleich der persönlichen Identifizierungsinformation mit einer persönlichen Identifizierungsbezugsinformation. Beide Arten von Informationen werden von einem Endgerät zur Station übertragen.

Das Verfahren zur kryptografischen Identitätsüberprüfung enthält folgende Verfahrensschritte: Daten eines Bezugsmerkmals und ein Schlüssel werden mit einem öffentlichen Netzwerkschlüssel verschlüsselt, ein zeitweiliger Schlüssel und eine Nachrichtennummer erzeugt, die persönlichen Merkmalsdaten, das erste Kryptogramm, der zeitweilige Schlüssel und die Nachrichtennummer werden mit einem öffentlichen Schlüssel in einem Endgerät verschlüsselt und diese Nachricht einer Sicherheitsdienststation über ein Kommunikationssystem zugesandt. Die Sicherheitsdienststation entschlüsselt die empfangene Nachricht mit ihrem geheimen Netzwerkschlüssel, vergleicht Merkmals und Bezugsmerkmalsdaten und erzeugt, wenn der Vergleich positiv ist, eine modifizierte Nachrichtennummer, die dann an das Endgerät zusammen mit einem ersten Schlüssel, der mit dem temporären Schlüssel verschlüsselt worden ist, zurückgesandt worden ist. Das Endgerät benutzt den ersten Schlüssel, nachdem mit dem temporären Schlüssel entschlüsselt und die Echtheit der modifizierten Nachrichtennummer überprüft worden ist, zur Erlangung eines zuganges zu den auf der Datenkarte gespeicherten Geheimdaten.

Xerox Copy Centre

FIG.5

## Gerät zur Identitätsüberprüfung, Verfahren zur kryptografischen Identitätsüberprüfung und Verfahren zum Feststellen einer Unterbrechung zwischen einem Endgerät und einem Kommunikationssystem

Die vorliegende Erfindung betrifft ein Gerät zur Identitätsüberprüfung gemäß dem Patentanspruch 1, ein Verfahren zur kryptografischen Identitätsüberprüfung gemäß dem Patentanspruch 5 und ein Verfahren zum Feststellen einer Unterbrechung zwischen einem Endgerät und einem Kommunikationssystem gemäß Anspruch 6.

Kunststoffkarten für unterschiedliche Typen von gespeicherten Daten sind gegenwärtig weit verbreitet im Gebrauch. Anwendungsbeispiele sind Kreditkarten und Karten, die eine Zugangskontrollinformation für automatische Schalter oder Kassenmaschinen tragen. Solche Karten werden zur Durchführung von Autorisierungen verwendet.

Diese Datenkarten sind jedoch in gewisser Weise unzulänglich:

(A) Die auf einer Karte speicherbare Datenmenge ist begrenzt. Gegenwärtig liegt die Speicherkapazität bei etwa 100 Bits.

(B) Die Speicherung ist normalerweise von Nur-Lese-Typ.

(C) Wenn eine Karte verlorengeht, besteht nur ein minimaler Schutz gegen Mißbrauch.

Zur Überwindung dieser Unzulänglichkeiten wird eine sog. personelle Datenkarte (PDC) vorgeschlagen. Eine solche personelle Datenkarte würde eine nicht flüchtige Ed 1 Sti/20.4.1982

Speichereinrichtung (beispielsweise vom RAM-Typ)aufweisen oder damit versehen sein, die eine hohe Speicherkapazität, beispielsweise mehrere Kilobits, aufweist. Diese PDC sollte auch mit einem effektiven Schutz gegen Verlust oder unbefugten Datenzugriff versehen sein. Eine solche PDC könnte für eine Vielfalt neuer Anwendungen benutzt werden.

Beispiele für eine speicherbare und für eine solche personelle Datenkarte verwendbare Informationsart sind folgende:

(a) die PDC kann als eine elektronische ID-Karte verwendet werden, die personelle Daten, beispielsweise Name, Geburtsdatum und -ort, Höhe, soziale Sicherheitsnummer, Führerscheininformation, Paßnummer und Adresse enthalten. Die ID-Karte könnte zur Beschleunigung von Verrichtungen, beispielsweise Identifizierungen des Eigners und Ausfüllen von Formularen benutzt werden.

(b) Die PDC kann die Gesundheitsgeschichte des Eigners kombiniert mit der Information über medizinische Behandlungen, chirurgische Eingriffe, Impfungen, Allergien, Anomalien, Blutgruppe, Rhesusfaktor, usw. enthalten. Die Verfügbarkeit und schnelle Auswertung dieser Daten ist in Notfällen wichtig.

(c) Die PDC kann als persönlicher Schlüssel für Kommunikationssicherheit verwendet werden, beispielsweise den privaten Unterschriftsschlüssel enthalten.

(d) Die PDC kann als eine wiederbelastbare Kreditkarte verwendet werden. Der Kartenausgeber, beispielsweise eine Bank, lädt die Karte mit einem gewissen Geldbetrag. Bei jeder Benutzung entnimmt der Eigner einen Teil dieses Betrages. Nach dem Verbrauch des totalen Betrages wird die Karte nachgeladen.

(e) Die PDC kann als ein persönliches Notizbuch und/oder persönlicher Speicher, beispielsweise für häufig benötigte Information, wie Telefonnummern, benutzt werden.

Eine technische Ausführung einer PDC könnte auf einem magnetischen Blasenspeicherbaustein basieren. Diese Bausteine würden die oben erwähnten Unzulänglichkeiten (A) und (B) eliminieren.

Auch andere Lese/Schreibspeicher, die eine Datenspeicherung ohne eine permanente Energieversorgung ermöglichen, können benutzt werden. Die Unzulänglichkeit (C), d.h. das Problem des Schutzes der gespeicherten sensitiven, vertraulichen oder geheimen Daten gegen unbefugten Zugriff oder entsprechende Modifikation würde bleiben.

Kryptografische Prinzipien, beispielsweise zur Identitätsverifikation, sind bereits bekannt (siehe /1/ bis /11/). Auf der Basis dieser kryptografischen Prinzipien können symmetrische (beispielsweise DES) und nichtsymmetrische Systeme (Kryptosysteme mit öffentlichem Schlüssel) ausgeführt werden. Symmetrische Systeme werden beispielsweise in /1/ beschrieben, während nichtsymmetrische Systeme, beispielsweise in /2/ bis /11/ beschrieben werden.

Ein mit dem gegenwärtig bekannten Identitätsverifikationssystemen verbundenes Problem liegt in der Tatsache, daß das kartenlesende Endgerät oder Terminal an ein Kommunikationssystem angeschlossen sein kann, das gegen Unbefugte ungeschützt ist. Über ein solches Kommunikationssystem kann in der Karte enthaltene Information von einem oder mehreren Unbefugten erhalten werden. Offensichtlich sollte dies verhindert werden, weil sensitive oder sogar geheime Daten in der Karte gespeichert sein können. Ein anderes mit konventionellen Identitätsverifikationssystemen in Zusammenhang stehendes Problem bezieht sich auf Information, die in dem Endgerät nach einer Echtheitsüberprüfung gespeichert bleibt. Diese Information kann durch einen Unbefugten ausgelesen werden.

Auch hier sollte wieder ein Zugriff zu sensitiver Information verhindert werden.

Literatur:

[1] National Bureau of Standards, Federal Information Processing Standard FIPS Publication 46, U.S. Department of Commence, Washington, D.C. (Jan. 1977)

[2] M. E. Hellman, "The Mathematics of Public-Key Cryptography", Scientific American, Vol. 241, No. 2 (Aug. 1979)

[3] Rivest, Shamir, Adleman, "A Method for Obtaining Digital Signatures and Public-Key Cryptosystems", Communications of the ACM, Vol. 21, No.2 (Feb. 78)

[4] Needham, R.M., Schroeder, M.D., "Using Encryption for Authentication in Large Networks of Computers", Communic. ACM 21,12 (Dec. 1978), 993-999

[5] Rabin, M., "Digitalized Signatures", Foundations of Secure Computing, R. Demillo et al., Eds., Academic Press, New York 1978

[6] Merkle, R.C., Hellman, M.E., "Hiding Information and Signatures in Trapdoor Knapsacks", IEEE Trans. Inf. Theory, Vol. IT-24, No. 5, Sept. 1978

[7] Shamir, A., "A fast Signature Scheme", MIT/LCS/TM-107, July 1978

[8] McEliece, R. J., DSN Progress Report 42-44, Jan./Feb. 1978

[9] Lagger, H., Mueller-Schloer, C., Unterberger, H., "Sicherheitsaspekte in rechnergesteuerten Kommunikationssystemen", Elektronische Rechenanlagen, Oldenbourg Verlag Munich, Dec. 1980, p. 276-280

[10] Diffie, W., Hellman, M.E., "New Directions in Cryptography", IEEE Transactions on Information Theory, Vol. IT-22, No. 6, Nov. 1976, p. 644-654

[11] Kolata, G.B., "New Codes Coming into Use", Science, Vol. 208, May 1980, p. 694-695

Aufgabe der Erfindung ist es, ein Gerät zur Überprüfung der Echtheit oder Identität einer eine Datenkarte präsentierenden Person anzugeben, das mit einem ungeschützten Kommunikationssystem verbunden ist, und bei dem die Karte trotzdem gegen Unbefugte oder Eindrinlinge gesichert ist.

Diese Aufgabe wird durch ein Gerät der eingangs genannten Art gelöst, das die im kennzeichnenden Teil des Patentanspruchs 1 angegebenen Merkmale aufweist.

Das erfindungsgemäße Gerät ermöglicht einen Zugriff zu geheimen oder sensitiven, auf einer personellen Datenkarte gespeicherten Daten mit einem Schutz gegen Mißbrauch der Karte durch unbefugte Benutzer.

Das erfindungsgemäße Gerät enthält ein Endgerät oder Terminal, das einen Kartenleser aufweist, wobei oder wodurch das Endgerät mit einem Kommunikationssystem verbunden ist, das gegen Unbefugte oder Eindringlinge ungeschützt sein kann.

Das erfindungsgemäße Gerät enthält auch ein Endgerät, in welchem nach einer Echtheitsüberprüfung keine Karteninformation verbleibt.

Das erfindungsgemäße Gerät umfaßt auch ein Endgerät, das keine personelle Bezugsidentifikationsinformation r permanenten Basis enthält.

Ein erfindungsgemäßes Gerät enthält sowohl geheime, oder sensitive Daten als auch zusätzliche persönliche Bezugsidentifikationsinformation in verschlüsselter Form.

Aufgabe der Erfindung ist es auch, ein Verfahren zur kryptografischen Identitätsverifikation anzugeben, welches einen Schutz gegen Unbefugte oder Eindringlinge gewährt, die das zur Übertragung von Nachrichten verwendete Kommunikationssystem abtasten oder abhören.

Diese Aufgabe wird durch die im kennzeichnenden Teil des Patentanspruchs 5 angegebenen Merkmale gelöst.

Aufgabe der Erfindung ist es auch, ein Verfahren zur Erkennung einer Unterbrechung zwischen einem Endgerät oder Terminal und einem Kommunikationssystem durch Erzeugung einer Unterbrechungsüberprüfung anzugeben.

Diese Aufgabe wird durch die im kennzeichnenden Teil des Patentanspruchs 6 angegebenen Merkmale gelöst.

Durch dieses Verfahren ist es möglich, einer Unterbrechung zwischen irgendeinem mehrerer Endgeräte und einem Kommunikationssystem zu erkennen, ohne daß eine Vorverteilung geheimer Schlüsselinformation aus dem Kommunikationssystem in die Endgeräte erfolgen muß.

In Zusammenfassung kann daher gesagt werden, daß gemäß einem Aspekt der Erfindung ein Apparat zur Identitätsüberprüfung geschaffen ist, der eine Datenkarte verwendet. Insbesondere ist die Karte eine persönliche Datenkarte. Der Apparat garantiert einen Schutz gegen Mißbrauch der Datenkarte durch unbefugte Benutzer.

Der Apparat enthält ein Terminal und eine Sicherheitsdienststation, die durch ein Kommunikationssystem miteinander verbunden sind, das zur Übertragung digitaler Daten aus dem Terminal zur Sicherheitsdienststation und umgekehrt vorgesehen ist.

Das Terminal enthält eine erste zentrale Verarbeitungseinheit (CPU), die einen ersten Speicher aufweist. Dieser Speicher ist so ausgebildet, daß er ein Programm, einen öffentlichen Netzwerkschlüssel und Variablen speichern kann. Das Terminal enthält auch einen Kartenleser zum Lesen von Daten aus der persönlichen Datenkarte und zur Einführung dieser Daten in den ersten Speicher. Die auf der Karte gespeicherten Daten können sensitive oder sogar geheime Daten enthalten. Das Terminal enthält des weiteren eine Eingabeeinrichtung zur Einführung persönlicher Identifizierungsinformation, beispielsweise persönliche Merkmale oder persönliche Identifizierungsnummern, in dem ersten Speicher. Das Terminal enthält auch einen ersten Kryptomodul, der mit der ersten zentralen Verarbeitungseinheit verbunden ist. Dieser erste Kryptomodul ist so ausgebildet, daß er von dem ersten Speicher empfangene Daten unter der Kontrolle der ersten zentralen Verarbeitungseinheit ver- und entschlüsselt.

Die Sicherheitsdienststation enthält eine zweite zentrale Verarbeitungseinheit (CPU), die einen zweiten Speicher aufweist. Dieser Speicher ist für die Speicherung eines Programms, eines geheimen Netzwerkschlüssels und von Variablen vorgesehen. Die Station enthält auch einen zweiten Kryptomodul, der mit der zweiten zentralen Verarbeitungseinheit verbunden ist. Der zweite Kryptomodul ist so ausgebildet, daß er von dem zweiten Speicher unter der Kontrolle der zweiten zentralen Verarbeitungseinheit empfangene Daten ver- und entschlüsselt. Die Station enthält des weiteren einen Komparator, der mit der zweiten zentralen Verarbeitungseinheit zum Vergleich persönlicher Identifizierungsinformation verbunden ist, die von dem Terminal zusammen mit ebenfalls von dem Terminal übertragener persönlicher Bezugsidentifizierungsinformation übertragen worden ist.

Gemäß einem anderen Aspekt dieser Erfindung ist ein Verfahren zur kryptografischen Identitätsüberprüfung geschaffen. Dieses Verfahren enthält folgende Schritte:

a) Die Karteninformation von einer persönlichen Datenkarte wird gelesen und Daten über ein persönliches Merkmal in ein Terminal eingegeben. Die Karteninformation enthält sowohl Daten über Bezugsmerkmale als auch einen ersten Schlüssel. Die Daten des Bezugsmerkmals und der erste Schlüssel werden mit einem öffentlichen Netzwerkschlüssel verschlüsselt und dadurch ein erstes Kryptogramm gebildet.

b) In dem Terminal werden ein temporärer Schlüssel und eine Nachrichtennummer erzeugt.

c) Die Daten des persönlichen Merkmals, das in der Karteninformation enthaltene erste Kryptogramm, die Nachrichtennummer und der der erste temporäre Schlüssel werden mit einem öffentlichen Netzwerkschlüssel in dem Terminal verschlüsselt. Diese Daten bilden eine erste Nachricht.

d) Die erste Nachricht wird über ein Kommunikationssystem einer Sicherheitsdienststation zugesandt.

e) Die das erste Kryptogramm enthaltende Nachrichtennummer wird mittels eines geheimen Netzwerkschlüssels in der Sicherheitsdienststation entschlüsselt. Dadurch werden der erste Schlüssel, die Nachrichtennummer, die Merkmalsdaten, die Bezugsmerkmalsdaten und der temporäre Schlüssel erhalten. Der erwähnte geheime Netzwerkschlüssel wird in wohlbekannter Weise mit dem öffentlichen Netzwerkschlüssel korreliert.

f) Die Merkmalsdaten und die Bezugsmerkmalsdaten werden in der Sicherheitsdienststation miteinander verglichen.

g) Durch Anwendung einer öffentlich bekannten Funktion auf die Nachrichtennummer wird in der Sicherheitsdienststation eine modifizierte Nachrichtennummer erzeugt.

h) Die modifizierte Nachrichtennummer und der erste Schlüssel mit dem temporären Schlüssel werden in der Sicherheitsdienststation verschlüsselt. Dadurch wird eine zweite Nachricht gebildet.

i) Diese zweite Nachricht wird über das Kommunikationssystem an das Terminal zurückgesandt.

j) Die zweite Nachricht wird mit dem temporären Schlüssel in dem Terminal entschlüsselt. Dadurch werden die modifizierte Nachrichtennummer und der erste Schlüssel erhalten.

k) Die modifizierte Nachrichtennummer wird mit einer erzeugten modifizierten Nachrichtennummer in dem Terminal verglichen. Die erzeugte modifizierte Nachrichtennummer wird in dem Terminal durch Anwendung der öffentlich bekannten Funktion auf die Nachrichtennummer selbsterzeugt.

l) Der erste Schlüssel wird zur Entschlüsselung der geheimen Daten verwendet.

Die Erfindung leifert eine Lösung für das Problem des Mißbrauchschutzes einer verlorenen Datenkarte. Die Erfindung benutzt die Entnahme eines persönlichen Merkmals (oder die Eingabe einer persönlichen Identifizierungsnummer) und die Verifikation (beispielsweise Fingerabdrücke oder Stimme) in Verbindung mit kryptografischen Prinzipien. Beide kryptografischen Systeme, d.h. das symmetrische (beispeilsweise DES) sowie nichtsymmetrische (Kryptosysteme mit öffentlichem Schlüssel) können verwendet werden.

Die Erfindung garantiert, daß persönliche Datenkarten nur von ihren Eigentümern benutzt werden können. Es sind nicht wie bei derzeitigen Systemen leicht aufbrechbare "geheime" Notizkodes (Geburtstat, Hochzeitstag, usw.) notwendig. In dem Terminal verbleibt keine benutzerspezifische Information, wodurch volle Benutzermobilität sicher gestellt ist. Die Sicherheitsdienststation muß keine Benutzernamen und -schlüssel speichern. Die Terminals können billig gehalten werden, weil der Merkmalskomparator an einer zentralen Stelle sich befindet und dadurch von vielen Terminals oder Teilnehmern benutzt werden kann.

Das erfindungsgemäße Verfahren kann bei persönlichen Zugangskontrollsystemen mit möglicherweise ungesicherten Leitungen zwischen dem Merkmalsnehmer und dem Komparator benutzt werden.

Die vorstehend angegebenen Anwendungsmöglichkeiten, Eigenschaften und Vorteile der Erfindung ergeben sich aus der nachfolgenden,eingehenderen Beschreibung eines bevorzugten Ausführungsbeispiels der Erfindung, wie es in den beigefügten Zeichnungen dargestellt ist. Von den Figuren zeigen:

Figur 1 ein Blockschaltbild eines herkömmlichen Konzepts einer Kryptografik mit öffentlichem Schlüssel;

Figur 2 ein Blockschaltbild eines Apparates mit verschiedenen Endgeräten und einer Sicherheitsdienststation, die an ein ungeschütztes Kommunikationssystem angeschlossen sind, wobei der Apparat eine Unterbrechungsüberprüfung durchführt;

Figur 3 ein Flußdiagramm für eine Unterbrechungsüberprüfung in einem Apparat gemäß Figur 2;

Figur 4 eine persönliche Datenkarte und die darin enthaltene Information;

Figur 5 einen Apparat zur erfindungsgemäßen Identitätsverifikation; und

Figur 6 ein anderes Flußdiagramm einer Echtheitsüberprüfung in dem Apparat nach Figur 5.

Da die Erfindung ein Paar sogenannter "Netzwerkschlüssel" verwendet, wird der Begriff "Netzwerkschlüssel" zunächst erklärt. Danach wird die logische Operationsfolge einer typischen Prüfung einer personenbezogenen Datenkarte auf Gültigkeit erklärt.

Im Kommunikationsnetzwerken mit einer großen Anzahl von Terminals oder Endgeräten oder Teilnehmern und mit häufig sich ändernden Verbindungen ist es oft vorteilhaft, Verschlüsselungssysteme zu benutzen, bei denen die Verschlüsselung einer Information mit einem allgemein bekannt gemachten Schlüssel, dem öffentlichen Schlüssel, erfolgt. Solche Verschlüsselungssysteme werden im folgenden kurz als Verschlüsselungssysteme mit öffentlichem Schlüssel oder öffentliche Schlüsselsysteme bezeichnet. Derartige Verschlüsselungssysteme sind in der englischsprachigen Literatur unter dem Begriff "Public Key Cryptor Systems" (PKC) bekannt (siehe beispielsweise /2/ bis /11/). Zentrale Sicherheitseinrichtungen sollten, wenn sie notwendig sind, so einfach wie möglich sein. Sowohl passive als auch aktive Leitungsabtastung oder -abhörung ist in Rechnung zu stellen.

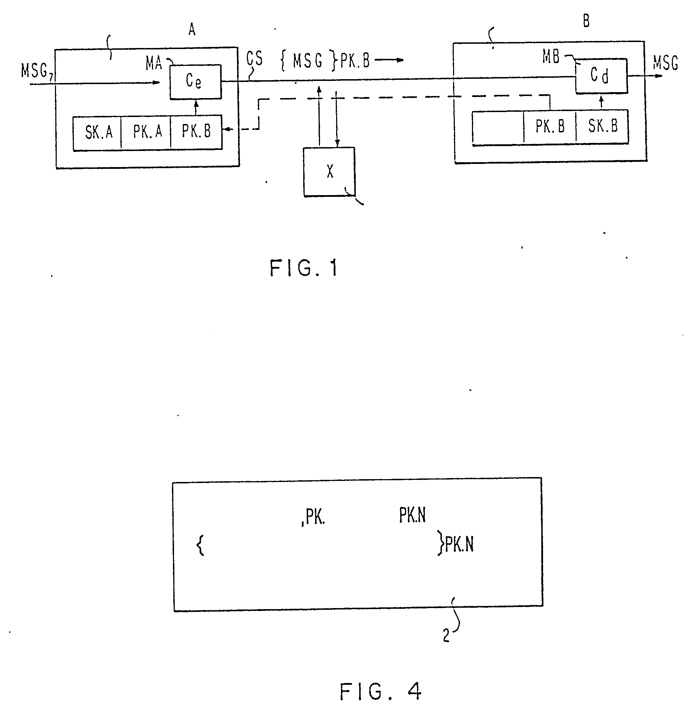

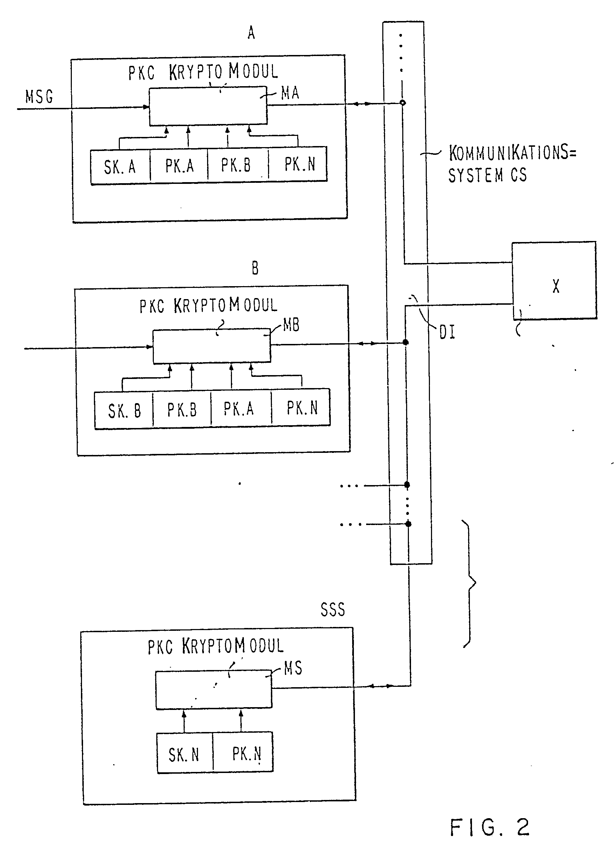

Die Figur 1 zeigt schematisch ein PKC-System oder Verschlüsselungssystem mit öffentlichem Schlüssel (siehe /2/ ). Zwei Stationen oder Endgeräte A und B sind über ein Kommunikationssystem CS miteinander verbunden. Die Engeräte A und B enthalten PKC-Schlüssel-oder -kryptomodule MA bzw. MB. Diese Module MA und MB arbeiten mit einem vorbestimmten Verschlüsselungsalgorithmus Ce bzw. einem vorbestimmten Entschlüsselungsalgorithmus Cd. Das Endgerät A ist mit einem öffentlichen Schlüssel PK.A und einem geheimen Schlüssel SK.A versehen. Ähnlich ist das Endgerät B mit einem öffentlichen Schlüssel PK.B und einem geheimen Schlüssel SK.B versehen. Zum Senden einer Botschaft oder Nachricht MSG zu dem Endgerät B muß das Endgerät A den öffentlichen Schlüssel PK.B des Endgerätes B bekommen. Es entschlüsselt dann die Nachricht MSG unter diesem Schlüssel PK.B und sendet die verschlüsselte Nachricht oder das Kryptogramm {MSG} PK.B zu dem Endgerät B. In den Endgerät B wird zum Entschlüsseln der geheime Schlüssel SK.B benutzt. Ein mit dem Kommunikationssystem CS verbundener Unbefugter X kann aus dem Kryptogramm keine klare oder verständliche Information entnehmen. Wenn der Unbefugte X aktiv wird, wenn er beispielsweise Nachrichten oder Botschaften einfügt oder -setzt, ohne daß er entdeckt wird, sind Gegenmaßnahmen erforderlich. Diese Gegenmaßnahmen umfassen die Anwendung eines öffentlichen Netzwerkschlüssels PK.N und eines geheimen Netzwerkschlüssels SK.N, wie es in der Figur 2 dargestellt ist und wie es im folgenden näher erläutert wird.

In der Figur 2 ist der Fall einer dezentralisierten Schlüsselspeicherung dargestellt. Nachdem das Endgerät B von dem Endgerät A abgefragt worden ist, überträgt das Endgerät B seinen öffentlichen Schlüssel PK.B zu dem Endgerät A. Eine passive Anzapfung oder Abhörung des Schlüssels PK.B nützt dem Unbefugten X nichts, weil er damit nicht entschlüsseln kann. Wenn der Unbefugte jedoch den Schlüssel PK.B von B durch seinen eigenen Schlüssel PK.X ersetzt, kann er die entschlüsselte Nachricht von A durch Entschlüsselung mit seinem Geheimschlüssel SK.X lesen. Das Endgerät A kann nicht unterscheiden, ob der empfangene Schlüssel von dem Endgerät B, wie angenommen, oder von dem Unbefugten X kam.

Die Lösung dieses Problems basiert auf den folgenden Annahmen

a) es werden ein oder mehrere sogenannte "Sicherheitsdienststellen" SSS in dem Kommunikationssystem CS installiert. Die Stelle oder Station SSS befindet sich in einem physischen Sicherheitsbereich, beispielsweise bei einem Netzwerkknoten.

b) Die Stelle SSS verwendet ein Paar der vorstehend erwähnten "Netzwerkschlüssel PK.N und SK.N. Der Schlüssel PK.N wird veröffentlicht. Obwohl dieser Schlüssel PK.N nicht geheim ist, muß sichergestellt werden, daß keiner irgendein Endgerät derart abschirmen kann, daß ihm der richtige Schlüssel PK.N nicht mehr zugeführt werden kann. Dies kann einfach dadurch erreicht werden, daß PK.N in den Zeitungen veröffentlicht wird.

c) Die Station oder Stelle SSS kann die folgenden einfachen Funktionen ausführen:

- Empfang einer kurzen Nachricht;
- Entschlüsselung dieser Nachricht über einen PKC-Algorithmus, welcher den geheimen Netzwerkschlüssel SK.N benutzt;
- Modifizierung der Nachricht durch Anwendung einer öffentlich bekannten Funktion (beispielsweise durch Addierung einer "1");
- Verschlüsselung der modifizierten Nachricht und Zurücksendung dieser Nachricht zum abfragenden Endgerät;
- Meldung an einen Kontrolleur (Mensch oder Maschine), wenn irgendein Konflikt auftritt.

Es sei darauf hingewiesen, daß die Sicherheitsdienststelle SSS keinerlei extensive Speichereinrichtungen für lange Nachrichten, Teilnehmernahmen oder deren öffentliche Schlüssel benötigt. Nach Figur 2 enthält die Station SSS einen PKC-Kryptomodul oder -schlüsselmodul MS, der mit dem Kommunikationssystem CS kommu niziert.

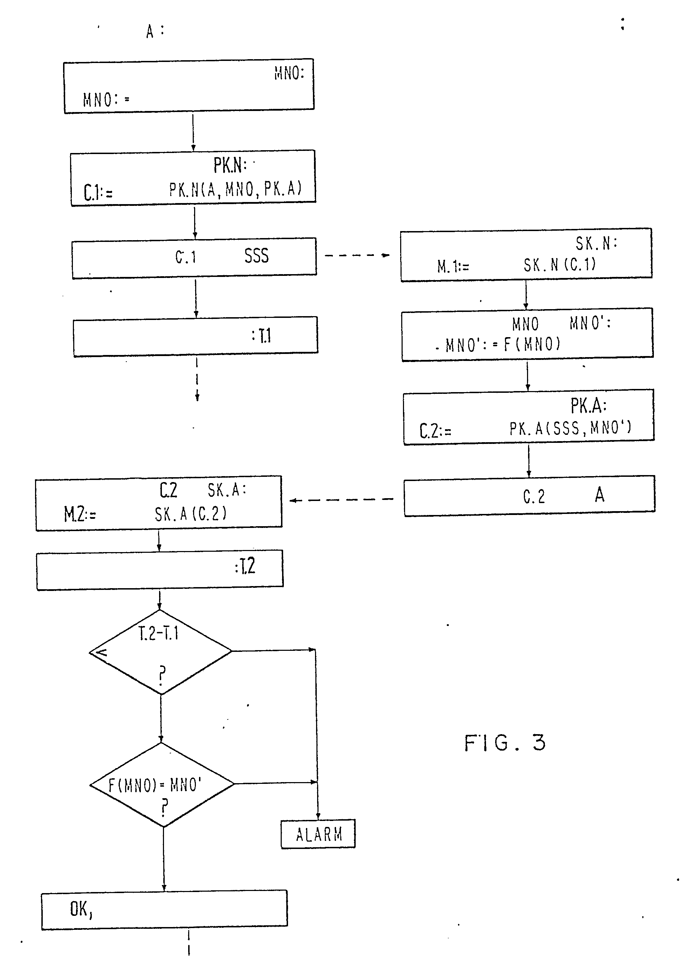

Während einer aktiven Anzapfung durch den Unbefugten oder Eindringling X wird eines der Endgeräte A, B .. notwendigerweise von dem Netzwerk CS und SSS getrennt, und zwar wenigstens während gewisser Zeitperioden. In Figur 2 ist die Trennung mit DI bezeichnet. Das Endgerät, welches als getrennt angenommen ist, könnte versuchen, eine solche Situation durch Aussenden einer Nachricht an das Netzwerk CS, SSS, beispielsweise an den nächsten Knoten, zu entdecken oder ermitteln, aber die Antworten könnten durch den Eindringling X vorgetäuscht werden. Das in der Figur 3 dargestellte Verfahren kann dies verhindern.

Gemäß dem Flußdiagramm nach Figur 3 werden folgende Schritte ausgeführt:

1. Das betroffene Endgerät (beispielsweise das Endgerät A) sendet bei zufällig ausgewählten Zeitpunkten oder Zeiten und so oft wie möglich kurze Nachrichten C.1 an die Sicherheitsdienststation SSS aus. Diese Botschaft C.1 enthält den Zeiger oder die Adresse (A) des Senders A und seinen öffentlichen Schlüssel PK.A. Da sie einmalig sein muß, enthält sie zusätzlich eine Nachrichtenzahl MNO, bestehend aus dem Zeitpunkt, Tag und einer Zufallszahl. Die Kombination (A, MNO, PK.A) wird dann unter oder mit dem öffentlichen Netzwerkschlüssel PK.N verschlüsselt, d.h.:

$$C.1 = \{A, MNO, PK.A\}\ PK.N \qquad (1)$$

Die Schreibweise " {....} PK" bedeutet eine PKC-Verschlüsselung mit dem Schlüssel PK. Diese Nachricht C.1 wird zu der Sicherheitsdienststation SSS übertragen.

2. Wenn keine Trennung DI vorkommt, wird die Nachricht C.1 von der Station SSS mit dem Schlüssel SK.N entschlüsselt. Es wird deshalb M.1 = DECR.SK.N (C.1) erhalten. Die Nachrichtenzahl MNO wird mittels einer öffentlich bekannten Funktion f in MNO' umgewandelt und zusammen mit der Adresse SSS der Station SSS unter den öffentlichen Schlüssel PK.A des Endgerätes A verschlüsselt. Dies hat eine Nachricht C.2

$$C.2 = \{SSS, MNO'\}\ PK.A \qquad (2)$$

zur Folge, die zu dem Endgerät A zurückgesendet wird. Dort wird sie mit geheimen Schlüssel SK.A des Endgerätes A entschlüsselt.

Zur Bestimmung, ob eine Trennung DI vorherrscht, wird zum Zeitpunkt t.1 ein Zeitgeber gestartet, wenn die erste Nachricht C.1 an die Stelle SSS gesandt wird. Der Zeitgeber wird zum Zeitpunkt t.2 angehalten, wenn die zweite Nachricht C.2 von dem Endgerät A empfangen worden ist. Es wird bewertet, ob die Zeitdifferenz (t.2 - t.1) innerhalb einer vorbestimmten Zeitgrenze oder -dauer liegt. Wenn nicht, wird ein Alarm ausgelöst. Wenn dies der Fall ist, wird bestimmt, ob die in dem Endgerät A bewertete Zahl f (MNO) gleich der Zahl MNO' ist, wenn sie von der Stelle SSS empfangen wird. Wenn diese Daten nicht gleich sind, wird ein Alarm ausgelöst.

Man kann an die folgenden Angriffe denken:

1. Der Eindringling X versucht die Antwort der Stelle SSS vorzutäuschen. Dies ist unmöglich, weil der Eindringlich die Nachricht C.1 nicht entschlüsseln und die Zahl MNO nicht richtig modifizieren kann.

2. Der Eindringling X empfängt die Nachricht C.1 und überreicht sie ohne Änderung über eine andere Leitung der Stelle SSS, um sie erklärt zu bekommen.

Die Stelle SSS versucht jedoch, die Antwort an die physischen Adressen der angezeigten Sender zurücksenden und nimmt deshalb notwendigerweise wahr, daß das Endgerät A schon eine Verbindung mit einer anderen Partei hergestellt hat (der Eindringling X ist daran interessiert, nur während der Verbindungsperioden des Endgeräts A mitzuhören). Wegen der daraus resultierenden Konfliktsituation wird von der Stelle SSS ein Alarmruf an das Kontrollsystem ausgegeben.

Zur Reduzierung der Wahrscheinlichkeit einer Entdeckung muß der Eingdringling X die Eindringzeit so kurz wie möglich halten. Auf der anderen Seite sollten die Endgeräte A, B, ... ihre Nachrichten oder Meldungen so oft wie möglich senden, um die Wahrscheinlichkeit einer Entdeckung zu erhöhen.

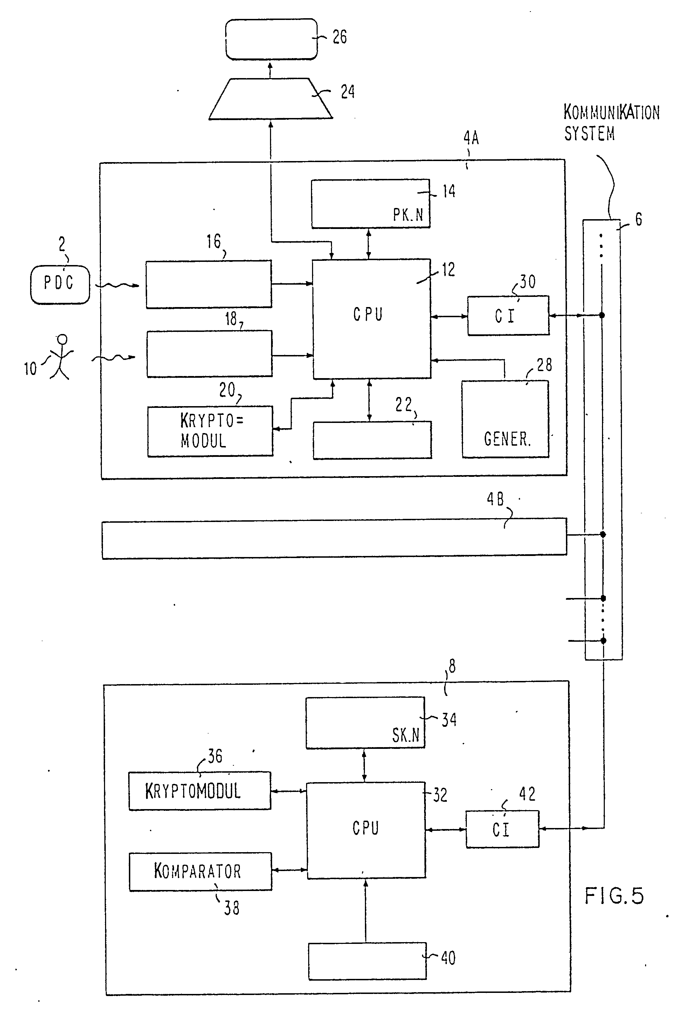

Anhand der Figuren 4 bis 6 wird das Protokoll für eine Gültigkeitskontrolle einer personenbezogenen Datenkarte (PDC) erklärt.

Nach Figur 4 enthält eine personenbezogene Datenkarte 2 senistive und/oder geheime Information. Die in einem PDC gespeicherten Daten müssen nicht einer unbefugten Person offenbart werden und es muß auch nicht die Möglichkeit bestehen, diese Daten ohne Befugnis und ohne Entdeckung zu ändern. Die Information auf der personenbezogenen Datenkarte 2 weist folgende Struktur auf: Sie enthält den Namen des Benutzers, der durch BENUTZERNAME gekennzeichnet ist, den öffentlichen Schlüssel des Benutzers, der durch PK-BENUTZER gekennzeichnet ist und einen öffentlichen Netzwerkschlüssel PK.N. Es sei wieder angenommen, daß der öffentliche Netzwerkschlüssel PK.N publiziert worden ist. Die Karte 2 enthält des weiteren ein Bezugsmerkmal, das durch BEZUGSMERKMAL gekennzeichnet ist und einen Schlüssel eines symmetrischen Verschlüsselssystems, insbesondere einen DES-SCHLÜSSEL oder DES-Schlüssel. Bei Benutzung eines Verfahrens mit personeller Identifikationsnummer oder Personenerkennungsnummer (PIN) würde BEZUGSMERKMAL auf der Karte 2 durch die PIN ersetzt werden. Es sei darauf hingewiesen, daß sowohl das BEZUGSMERKMAL, als auch der DES-SCHLÜSSEL mit dem öffentlichen Netzwerkschlüssel PK.N verschlüsselt sind. Demzufolge wird eine PKC-Verschlüsselung durch {....} gekennzeichnet, während eine DES-Verschlüsselung durch <.....> gekennzeichnet wird. Die Karte 2 enthält schließlich geheime Daten GEHEIMDATEN, die zu schützen sind. Die GEHEIMDATEN sind mit dem DES-SCHLÜSSEL verschlüsselt. Demtentsprechend enthält die Karte 2 sowohl ein nichtsymmetrisches als auch ein symmetrisches Kryptogramm.

In der Figur 5 ist ein Gerät zur Identitätsverifikation dargestellt, welches eine Datenkarte 2 benutzt. Das Gerät ist so ausgelegt, daß es einen Schutz gegen Mißbrauch der Karte 2 durch unbefugte Benutzer bietet.

Das Gerät enthält verschiedene Endgeräte 4A, 4B, ... die an ein ungeschütztes Kommunikationssystem 6 angeschlossen sind. Dieses Kommunikationssystem 6 kann beispielsweise ein Telefonoder Rundfunknetz sein. Es kann auch ein paketvermitteltes Netzwerk oder Durchschaltenetzwerk sein. Zu solchen Kommunikationssystemen 6 haben Unbefugte leicht Zugriff. An das Kommunikationssystem 6 ist auch eine Sicherheitsdienst stelle oder -station 8 angeschlossen. Die einzelnen Endgeräte 4A, 4B, ... können alle gleich ausgebildet sein. Deshalb wird nur das Endgerät 4A näher betrachtet.

Zur Herstellung eines unveränderbaren Bindegliedes zwischen dem Karteneigner und der Karte 2 wird die Information zur Personenidentifikation in das Endgerät 4A eingegeben. Das personelle Merkmal ist durch den Karteneigner 10 symbolisiert. Die personelle Verifikation kann auf die Erkennung der Stimme oder eines Fingerabdrucks basiert sein. Anstelle dessen kann es jedoch in manchen Fällen ausreichen, wenn der Karteneigner sei ner persönliche Identifikationszahl PIN über eine Tastatur eingibt. Unglücklicherweise können die vom Eigner 10 entnommenen persönlichen Eigenschaften nicht direkt zur Erzeugung kryptografischer Schlüssel verwendet werden, weil die resultierenden Bitmuster zu einem gewissen Grad variieren. Die Kryptoschlüssel müssen auf der anderen Seite Bit für Bit reproduzierbar sein. Zur Überwindung dieses Problems ist die Sicherheitsdienststelle 8 mit einem Komparator zum Vergleich persönlicher Merkmale mit Bezugsmerkmalen ausgestattet, wie es später erklärt wird. Wie bereits erwähnt, benutzt die Sicherheitsdienststelle 8 ein Paar Netzwerkschlüssel PK.N und SK.N.

Das Endgerät 4A ist mit einer zentralen Verarbeitungseinrichtung 12 ausgestattet, der ein Speicher 14 zugeordnet ist. Anstelle der zentralen Verarbeitungseinheit 12 und eines getrennten Speichers 14 kann ein Mikrocomputer benutzt werden. Ein Mikrokomputer oder -rechner enthält bereits einen Speicher. Die zentrale Verarbeitungseinheit 12 ist vorzugsweise ein Mikroprozessor. Der Speicher 14 wird zum Speichern eines Programms, des öffentlichen Netzwerkschlüssels PK.N und von Variablen benutzt.

Zum Lesen der Information auf der persönlichen Datenkarte 2 wird ein Kartenleser 16 benutzt. Der Kartenleser 16 ist mit der zentralen Verarbeitungseinheit 12 verbunden. Die Kartendaten werden in den Speicher 14 über die zentrale Verarbeitungsheit 12 eingegeben. Zur Entnahme spezifischer Merkmale des Karteneigners 10 für den Speicher 14 ist ein Merkmalentnehmer 18 vorgesehen. Der Merkmalentnehmer 18 weist eine Eingabeeinrichtung, beispielsweise einen Fingerabdrucksensor, auf, die oder der in einem Verifikationsverfahren von dem Karteneigner 10 zu benutzen ist. Der Merkmalsentnehmer 18 ist auch mit der ersten zentralen Verarbeitungseinheit 12 verbunden.

Eine sehr wichtige Einheit in dem Endgerät 4A ist ein Krypto- oder Schlüsselmodul 20. Der Kryptomodul 20 ist ebenfalls mit der zentralen Verarbeitungseinheit 12 verbunden. Vorzugsweise enthält der Kryptomodul 20 zwei Einheiten, eine DES-Krypto- oder -Schlüsseleinheit und eine PKC-Kryptoeinheit. Die PKC-Einheit kann insbesondere einen Baustein enthalten, der nach der sog. RSA-Methode arbeitet, die aus /3/ bekannt ist. Im allgemeinen ist zu erwähnen, daß der Kryptomodul 20 sowohl DES- als auch PKC-Algorithmen verarbeiten können sollte. Ein symmetrisches System (beispielsweise DES) ist nicht notwendig. Anstelle dessen könnte ein PKC-Algorithmus verwendet werden, ohne daß die Sicherheit des Systems beeinträchtigt würde. Der Grund für die Verwendung symmetrischer Kryptoalgorithmen ist deren hohe Geschwindigkeit. Der Kryptomodul 20 ist so ausgebildet, daß er von dem Speicher 14 unter der Kontrolle oder Steuerung der zentralen Verarbeitungseinheit 12 empfangene Daten ver- und entschlüsseln kann.

Der zentralen Verarbeitungseinheit 12 ist ein Zeitgenerator oder Zeitgeber 22 zugeordnet. Dieser Zeit generator wird zur Bestimmung der Zeitperiode benutzt, die zwischen der Sendung einer Nachricht und dem Empfang einer Antwortmeldung verstrichen ist, wie es später erklärt wird. Der Zeitgenerator 22 wird auch zur Bestimmung der Zeit und des Datums benutzt, die in der Nachrichtennummer NMO enthalten sind. Eine Tastatur 24 ermöglicht den Zugriff zu der Einheit 12 von außen. Eine Anzeigeeinheit 26 kann der Tastatur 22 zugeordnet sein. Mit der zentralen Verarbeitungseinheit 12 ist auch ein Zufallszahlgenerator 28 verbunden. Dieser Generator 28 wird zur Erzeugung eines zeitweiligen Schlüssels und einer Zufallszahl verwendet, die in die Nachrichtennummer NMO aufzunehmen ist. Die zentrale Verarbeitungseinheit 12 ist mit dem Kommunikationssystem 6 über eine Kommunikationsschnittstelle 30 verbunden.

Es sei darauf hingewiesen, daß die Sicherheitsdienststelle 8 ähnlich ausgebildet oder konstruiert ist, wie das Endgerät 4A. Die Sicherheitsdienststelle 8 enthält auch eine zentrale Verarbeitungseinheit 32, die einen Speicher 34 aufweist. Der Speicher 34 wird zum Speichern eines Programms, eines geheimen Netzwerkschlüssels SK.N und von Variablen verwendet.

Ein Kryptomodul 36 ist mit der zentralen Verarbeitungseinheit 32 verbunden. Dieser Kryptomodul 36 wird zum Ver- und Entschlüsseln von Daten verwendet, die von dem zweiten Speicher 34 unter der Steuerung der zentralen Verarbeitungseinheit 32 empfangen werden. Der Kryptomodul 36 sollte die gleiche Konstruktion aufweisen, wie der Kryptomodul 20 des Endgerätes 4A.

Die zentrale Verarbeitungseinheit 32 arbeitet mit einem an ihn angeschlossenen Komparator 38 zusammen. Dieser Komparator 38 wird zum Vergleichen übertragener persönlicher Identifikationsinformation mit persönlicher Bezugsidentifikationsinformation verwendet, die ebenfalls über das Kommunikationssystem 6 übertragen wird.

In der Sicherheitsdienststelle 8 kann ebenfalls ein Zeitgenerator oder Taktgeber 40 vorgesehen sein. Dieser Zeitgenerator 40 kann ebenfalls in Zusammenhang mit der Bestimmung der zwischen ausgesandter und empfanger Nachricht verstrichenen Zeitperiode verwendet werden. Die zentrale Verarbeitungseinheit 32 ist mit dem Kommunikationssystem 6 über eine Kommunikationsschnittstelle 42 verbunden.

Der Kryptomodul 20 ist vorzugsweise so ausgebildet, daß er als ein öffentliches Schlüsselsystem arbeitet, das in seiner verschlüsselnden Betriebsweise einen öffentlichen Netzwerkschlüssel PK.N verwendet, und als ein symmetrisches System oder DES-System, das in seiner entschlüsselnden Betriebsweise einen symmetrischen Schlüssel oder -DES-Schlüssel verwendet. Der Kryptomodul 36 kann vorzugsweise so ausgebildet sein, daß er als ein öffentliches Schlüsselsystem arbeitet, das in seiner entschlüsselnden Betriebsweise einen geheimen Netzwerkschlüssel SK.N verwendet, und als ein symmetrisches System oder DES-System, das in seiner verschlüsselnden Betriebsweise den zeitweiligen symmetrischen Schlüssel oder DES-Schlüssel verwendet. Konventionellerweise ist der geheime Netzwerkschlüssel SK.N mit dem öffentlichen Netzwerkschlüssel PK.N korreliert.

Bei Abwesenheit eines Kartenbenutzers 10 sind die Endgeräte 4A, 4B, ... "leer", d.h. es sind keine Benutzerschlüssel oder Bezugsmerkmale gespeichert. Nach dem Eingeben der persönlichen Datenkarte 2 wird der zugeordnete Modul 4A oder 4B dem spezifischen Benutzer 10 zugewiesen, wenn die Gültigkeitsüberprüfung erfolgreich ausgeführt worden ist.

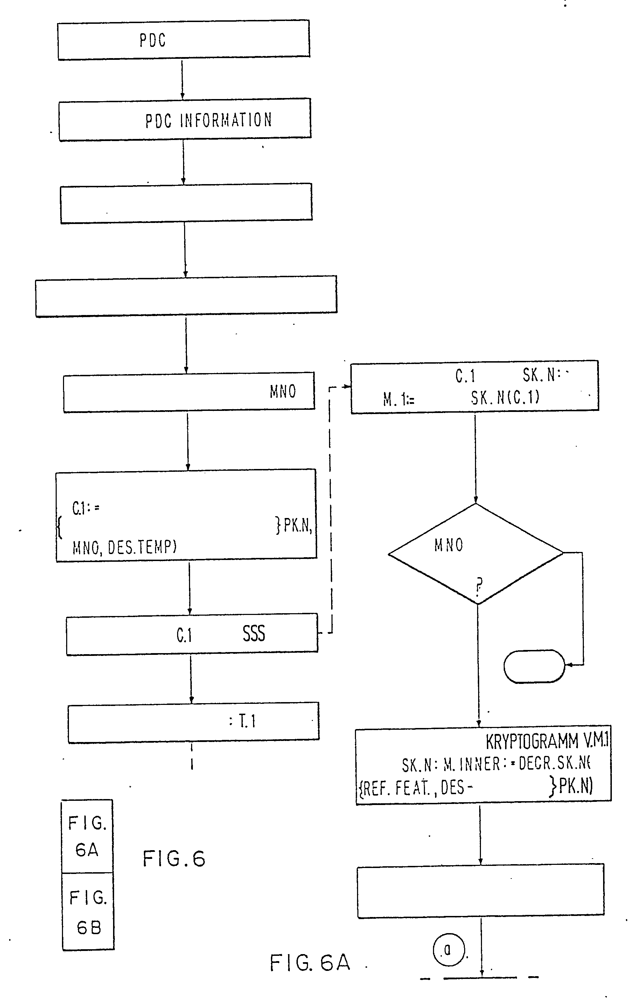

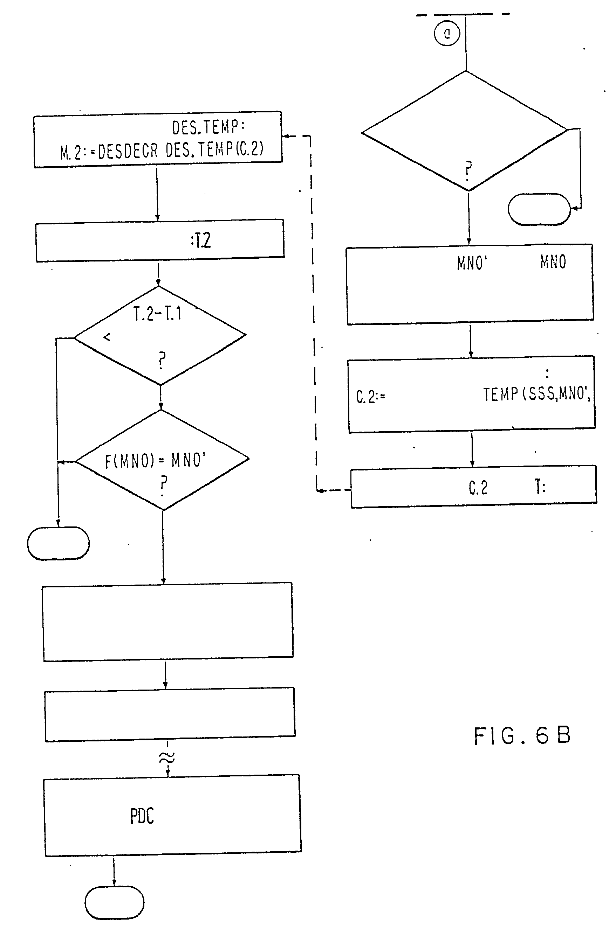

In der Figur 6 ist ein Flußdiagramm dargestellt, welches zeigt, wie ein Verfahren zur Feststellung der Gültigkeit ausgeführt werden kann. Auf der linken Seite der Figur 6 sind die Tätigkeiten des Endgerätes registriert, während auf der rechten Seite der Figur 6 die Tätigkeiten der Sicherheitsdienststelle 8 beschrieben sind.

Nach Figur 6 wird ein PDC-Verfahren zur Feststellung der Gültigkeit oder Richtigkeit durch Eingabe der persönlichen Datenkarte 2 in den Kartenleser 16 und durch Aktivierung des Sensors des Merkmalsentnehmers 18 gestartet. Anstelle eines persönlichen Merkmals kann auch eine persönliche Identifizierungsnummer in das Endgerät 4A eingegeben werden. Der Kartenleser 16 liest die PDC-Information und der Merkmalsnehmer 18 nimmt von dem Karteninhaber oder -benutzer 10 ein oder mehrere persönliche Merkmale. Die von dem Kartenleser 16 gelesene Information kann vorzugsweise und wie in der Figur 4 dargestellt, sämtliche in der Karte 2 enthaltene Information aufweisen. Danach erzeugt die zentrale Verarbeitungseinheit 12 zufällig einen zeitweiligen DES-Schlüssel, der mit DES.TEMP bezeichnet ist. Zu diesem Zweck wird der Zufallszahlgenerator 28 verwendet. Dort wird auch eine Nachrichtennummer MNO erzeugt. Nun sind in dem Endgerät 4A die folgenden Daten vorhanden: Die Adresse T des die Nachricht sendenden Endgerätes 4A, das von dem Merkmalsnehmer 18 genommene MERKMAL, das Kryptogramm oder die verschlüsselte Nachricht (BEZUGSMERKMAL, DES-Schlüssel) PK.N, das oder die von der persönlichen Datenkarte 2 erhalten worden ist, die Nachrichtennummer MNO und den zeitweilen DES- Schlüssel DES.TEMP. Diese Daten werden jetzt mit dem öffentlichen Netzwerkschlüssel PK.N verschlüsselt, so daß sie eine erste Nachricht C.1. bilden.

Die erste Nachricht C.1 wird über das Kommunikationssystem 6 zur Sicherheitsdienststelle 8 gesandt. Zu diesem Zeitpunkt wird die Zeit aus dem Zeitgenerator oder Zeitgeber 22 in den Speicher zur Bildung eines ersten Zeitpunktes T1 eingelesen.

Die erste Nachricht C.1 wird durch die Sicherheitsdienststation 8 mit dem geheimen Netzwerkschlüssen SK.N entschlüsselt. Dies wird durch den Kryptomodul 36 ausgeführt. Als Folge davon sind jetzt alle in den runden Klammern (... ) der Nachricht C.1 enthaltenen Daten in der Station 8 verfügbar. Daraufhin wird geprüft, ob die empfangene Nachrichtennummer MNO in einem vorbestimmten Zeitfenster angeordnet ist. Wenn dies der Fall ist, stimmt die Nachrichtennummer MNO.

Jetzt wird das innere Kryptogramm der ersten Nachricht C.1, d.h. das Kryptogramm {BEZUGSMERKMAL, DES-NORMALSCHLÜSSEL} PK.N mit dem geheimen Netzwerkschlüssel SK.N entschlüsselt. Dadurch werden das BEZUGSMERKMAL und der DES-Schlüssel als Klardaten erhalten.

Der nächste Schritt liegt im Vergleich des übertragenen MERKMALS mit dem übertragenen BEZUGSMERKMAL. Der Vergleich wird durch den Komparator 38 ausgeführt. Solche Komparatoren sind beispielsweise in den konventionellen PAC (Personelle Zugangssteuerungs-)-Methoden bekannt.

Wenn der Vergleich positiv ist, d.h. die Merkmale entsprechen sich innerhalb vorbestimmter Grenzen, wird eine modifizierte Nachrichtennummer MNO$'$ erzeugt. Diese modifizierte Nachrichtennummer MNO$'$ wird aus der übertragenen Nachrichtennummer MNO durch Anwendung einer öffentlich bekannten Funktion F erhalten.

Als ein nächster Schritt werden die folgenden Daten mit den zeitweiligen DES-Schlüssel DES.TEMP verschlüsselt: Die Adresse SSS der Sicherheitsdienststation 8, die modifizierte Nachrichtennummer MNO$'$ und der DES-Schlüssel. Die Verschlüsselung resultiert in einer zweiten Nachricht C.2. Diese zweite Nachricht C.2 wird an das Endgerät gesandt.

Dort wird die empfangene zweite Nachricht C.2 mit dem zeitweiligen DES-Schlüssel DES.TEMP entschlüsselt. Bei der Ankunft der zweiten Nachricht C.2 wird der Zeitgenerator 22 bei einer Zeit T2 gelesen. Wenn die Zeitdifferenz T2 - T1 kleiner als eine vorbestimmte Zeitdauer ist, wird bestimmt, ob die modifizierte Nachrichtennummer MNO$'$ richtig ist. Zu diesem Zweck wird in der Station 8 die Funktion F auf die Nachrichtennummer MNO, die zuvor ausgesandt worden ist, angewandt. Dementsprechend wird die modifizierte Nummer F (MNO) erhalten. Wenn diese Nummer F (MNO) gleich der empfangenen modifizierten Nachrichtennummer MNO$'$ ist, d.h. wenn die Prüfung positiv ist, werden die GEHEIMDATEN auf der Karte 2 mit Hilfe des DES-Schlüssels entschlüsselt. Dann wird unter Benutzung der erforderlichen GEHEIMDATEN die Operation fortgeführt.

Schleißlich werden der DES-Schlüssel, alle von der personellen Datenkarte 2 gelesene Information und das personelle MERKMAL im Speicher 14 des Endgerätes 4A gelöscht und die Operation wird gestoppt.

Um den Anforderungen und Bestimmungen der Datensicherungsgesetze Genüge zu tun, könnten die GEHEIMDATEN durch zusätzliche Verschlüsselungen strukturiert sein, um sicherzustellen, daß nur gewisse Teile davon in einem Zeitpunkt zugänglich sind.

Die Vorteile des in Figure 5 dargestellten Apparates und des Verfahrens gemäß Figur 6 sind folgende:

a) Die personelle Datenkarte (PDC) kann Daten enthalten, die gegen Mißbrauch zu schützen sind. Diese Daten sind effektiv geschützt, weil ein Zugriff nur nach einer positiven Identitätsüberprüfung möglich ist. Dadurch ist garantiert, daß persönliche Datenkarten nur von ihren Eigentümern benutzt werden können.

b) Das Endgerät selbst muß keinen Komparator enthalten, um zu bestimmen, ob ein autorisierter Benutzer die Karte in den Kartenleser eingefügt und zusätzlich ein personelles Merkmal oder eine personelle Identifizierungsnummer (PIN) zugeführt hat. In der vorliegenden Erfindung ist ein solcher Komparator in die Sicherheitsdienststelle aufgenommen. Es kann eine große Anzahl von Endgeräten teilnehmen lassen. Die Folge davon ist, daß ein relativ billiges System zur kryptografischen Identitätsverifikation erhalten wird.

c) Die Sicherheitsdienststation muß keine Daten des Benutzers speichern, beispielsweise Benutzernamen und -schlüssel, weil diese Daten in einer verschlüsselten Form auf der personellen Datenkarte gespeichert sind. Deshalb werden alle Änderungen der Benutzerdaten auf der Karte selbst ausgeführt. Es ist nicht notwendig, solche Daten in der Sicherheitsdienststation auf den neuesten Stand zu bringen.

d) Ein anderer Vorteil liegt in der Tatsache, daß irgendeine Sicherheitsdienststation, an welche das benutzte Endgerät angeschlossen ist, die Gültigkeitsüberprüfung so lange ausführen kann, wie diese Station mit dem geheimen Netzwerkschlüssel (SK.N) versehen ist. Das bedeutet, daß eine einzelne personelle Datenkarte in Verbindung mit separaten Sicherheitsstationen benutzt werden kann, ohne die Notwendigkeit einer Kommunikation über die personellen Merkmale zwischen diesen Stationen. Diese Eigenschaft garantiert eine weite Mobilität für den Benutzer. In anderen Worten, der Benutzer kann seine oder ihre Karte an verschiedenen Stellen benutzen.

e) In dem erfindungsgemäßen Gerät und der erfindungsgemäßen Methode ist eine unzweideutige Identitätsverifikation möglich, selbst wenn die Verbindungen zwischen dem Endgerät und dem Kommunikationssystem, welches die Sicherheitsdienststation enthält, ungeschützt ist.

f) Da keine Information in dem Endgerät verbleibt, wird wiederum eine große Mobilität für den Benutzer sichergestellt.

## Ansprüche

1. Verfahren zum Feststellen einer Unterbrechung zwischen einem Endgerät und einem Kommunikationssystem, wobei das Endgerät einen ersten Kryptomodul aufweist, der als ein öffentliches Kryptosystem arbeitet, und der zum Verschlüsseln mit Hilfe eines öffentlichen Netzwerkschlüssels und zum Entschlüsseln mit Hilfe eines ihm eigenen geheimen Netzwerkschlüssels ausgebildet , und wobei das Endgerät einen ihm eigenen öffentlichen Schlüssel erzeugt, der mit einer vorbestimmten Funktion, einer Endgerätadresse und einer Stationsadresse versehen ist, **gekennzeichnet durch** die folgenden Verfahrensschritte:

a) In dem Endgerät wird eine erste Nachricht gebildet, die

a1) die Adresse des Endgerätes,

a2) eine einzige Nachrichtennummer, und

a3) den öffentlichen Schlüssel des Endgerätes enthält,

b) die erste Nachricht wird unter oder mit dem öffentlichen Netzwerkschlüssel verschlüsselt,

c) die verschlüsselte erste Nachricht wird an eine Sicherheitsdienststation gesandt, wobei die Stationsadresse dieser Station zugeteilt ist,

d) die erste Nachrichtennummer wird einem geheimen Netzwerkschlüssel in der Sicherheitsdienststation entschlüsselt, wobei der geheime Netzwerkschlüssel mit dem öffentlichen netzwerkschlüssel unzweideutig korreliert und dadurch die Adresse, die einzige Nachrichtennummer und der öffentliche Schlüssel des Endgerätes identifiziert wird,

e) die identifizierte Nachrichtennummer wird durch Verwendung der vorbestimmten Funktion modifiziert und dadurch eine modifizierte Nachrichtennummer erhalten,

f) in der Sicherheitsdienststation wird eine zweite Nachricht gebildet, die

f1) die Adresse der Sicherheitsdienststation und

f2) die modifizierte Nachrichtennummer enthält, und

g) die zweite Nachricht wird unter oder mit dem öffentlichen Schlüssel des Endgerätes verschlüsselt,

h) die verschlüsselte zweite Nachricht wird an das Endgerät gesandt und dadurch die Adresse des Endgerätes zur Adressierung des Endgerätes verwendet,

i) die verschlüsselte zweite Nachricht wird in dem Endgerät mit dem geheimen Schlüssel des Endgerätes entschlüsselt und dadurch eine Adresse und eine modifizierte Nachrichtennummer identifiziert,

j) die einzige Nachrichtennummer wird entsprechend der vorbestimmten Funktion modifiziert und

k) die identifizierte modifizierte Nachrichtennummer wird mit der modifizierten einzigen Nachrichtennummer verglichen und dadurch die Sicherheitsdienststation legalisiert oder beglaubigt und das Vorhandensein einer Verbindung zwischen dem Endgerät und dem Kommunikationssystem bekräftigt.

2. Verfahren nach Anspruch 1, **dadurch gekennzeichnet,** daß zur Bestimmung, ob eine vorbestimmte Zeit zwischen dem Aussenden der Verschlüsselten ersten Nachricht und dem Empfang der entschlüsselten zweiten Nachricht überschritten worden ist, eine Zweitausschnittsmethode verwendet wird.

3. Verfahren nach Anspruch 2, **dadurch gekennzeichnet,** daß ein Zeittaktgeber gestartet wird, wenn die verschlüsselte erste Nachricht an die Station gesandt wird, und daß der Zeittaktgeber angehalten wird, wenn die zweite Nachricht entschlüsselt worden ist.

FIG. 1

FIG. 4

FIG. 2

FIG. 3

FIG.5

FIG.6

FIG. 6A

DES.TEMP:
M.2:=DESDECR DES.TEMP(C.2)

:T.2

T.2-T.1

<

?

F(MNO) = MNO'

?

(a)

?

MNO'        MNO

:
C.2:=        TEMP(SSS,MNO',

C.2        T:

≈

PDC

FIG. 6B